# EUROPEAN PATENT APPLICATION

(11) **EP 0 558 180 A1**
(43) Date of publication of application: **01.09.1993**
(21) Application number: 93300489.7
(22) Date of filing: 22.01.1993
(51) Int. Cl.: F16K 27/00, F15B 13/00

(54) **Improvements relating to fluid flow control apparatus**

(30) Priority: 25.02.1992 GB 9203938
(71) Applicant: ALEXANDER CONTROLS LIMITED, Birmingham B35 6AD (GB)
(72) Inventor: Selini, Paul, Tamworth Staffordshire B77 1JH (GB); Walker, Richard Albert, West Midlands B70 7LW (GB)
(74) Representative: Hands, Horace Geoffrey

(57) **Abstract**

This invention provides a manifold arrangement for complex plumbing systems for example car wash apparatus in which a bank of solenoid valves (14) is fixed to a common manifold (10) by tubular bolts (40) arranged to connect fluids for flow from the manifold interior via the valves, or across the manifold not communicating with the manifold interior, or both. The valves are servo-closed by line pressure.

## Description

This invention relates to apparatus for the supply and control of fluids between a multiple of inlets/outlets. The invention may find use in car wash apparatus where one or more kinds of detergent are to mixed with cold water for washing a vehicle, for example an initial strong detergent wash and a later lighter foam wash, or perhaps a stronger detergent applied to the wheels than is applied elsewhere, using water which is recycled from the apparatus; followed by a fresh water rinse, and later a hot water rinse again using fresh water with wax additive and/or drying agents.

The plurality of flow lines and control valves required in such apparatus lead to complex plumbing, and the object of the invention is to simplify this and facilitate replacement of control valves in the event of repair or maintenance requirement.

According to the invention, means for controlling the flow of fluids comprise a tubular manifold, a plurality of individually operable solenoid valves mounted on the manifold, a number of inlets and/or outlets opening to and from the manifold, and further inlets or outlets to or from the manifold via the solenoid valves, each of those valves being fixed in place on the manifold by a corresponding tubular bolt extending diametrically through the manifold between a head on one side and a flow passage in the solenoid valve on the other side.

According to a feature of the invention, each solenoid valve comprises a body formed with inlet and outlet passages connected by a transfer chamber, a diaphragm in said chamber, a small flow orifice through the diaphragm aligned with the inlet passage, a larger flow orifice through the diaphragm aligned with the outlet passage, and an armature which is electrically displaceable between two positions in one of which the armature blocks the larger orifice and holds the diaphragm on to seats formed around each of the inlet and outlet passage terminations at the transfer chamber so that inlet fluid may bleed to the transfer chamber through the small orifice but not exhaust therefrom, whereby inlet pressure at least assists in holding the valve closed, and in the other of which the armature is displaced away from the said one position to allow exhaust of fluid from the transfer chamber through the larger orifice, to allow the diaphragm to flex away from the said seats, and to allow fluid flow direct from inlet to outlet.

Ones of the valves may be connected to additive supplies so that when one such valve is switched to open condition additive may be pumped or drawn through the valve, via the bolt; or the flow may be in the opposite direction, that is to say flow from the manifold may be controlled through a particular valve for later admixture with the additive for supply to the spray jets, nozzles and the like to distribute the mixed product on the vehicle being washed. The bolts may be laterally ported so that such flow may be to or from the manifold interior via the bolt and the solenoid valve, or alternatively lateral porting may be omitted in which case the tubular bolt merely serves as a convenient connection and assembly mounting for the solenoid valve and to connect it to a flow line opening axially at the head of the bolt, for example via a hose connection.

The bolts may be screw connected into the inlet or outlet passages of the valves.

One embodiment of the invention is now more particularly described by way of example only, and with reference to the accompanying drawings wherein:-
Figure 1 is a part sectional elevation of manifold;
Figure 2 is an end elevation of the same;
Figure 3 is a sectional elevation on the line 3-3, Figure 1, and
Figure 4 is similar to Figure 3 but showing the solenoid valve open and on a larger scale.

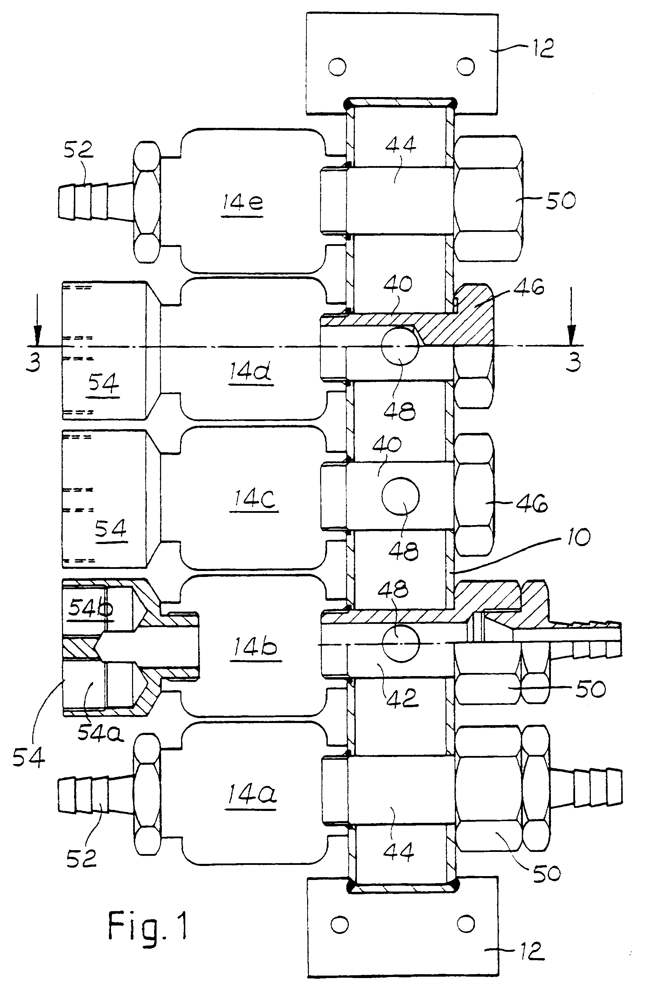

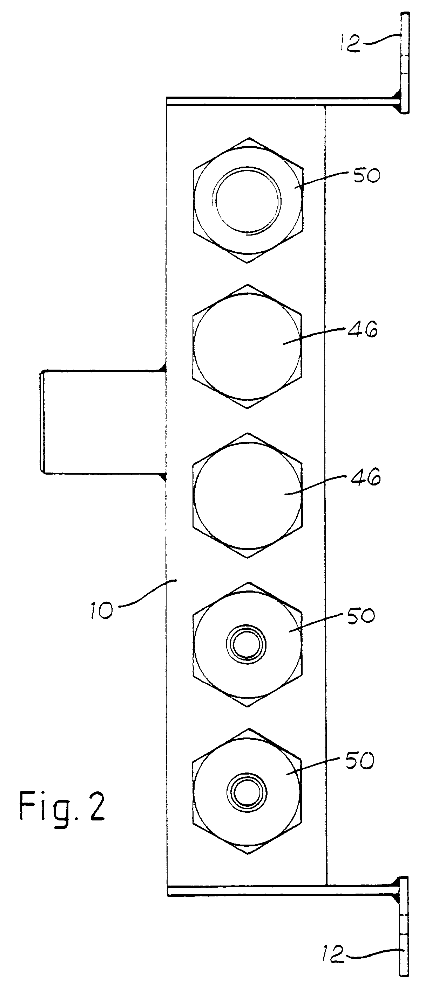

Turning now to the accompanying drawings and initially to Figures 1 and 2 thereof, the manifold comprises a main tube 10 having a lateral stub pipe 12 for connection of one fluid thereto. Brackets 14 for mounting the manifold in its position of use.

In this specific embodiment five solenoid valves generally indicated by the reference number 14 (including 14a -e) are mounted on the manifold; the number of solenoids is obviously variable according to need.

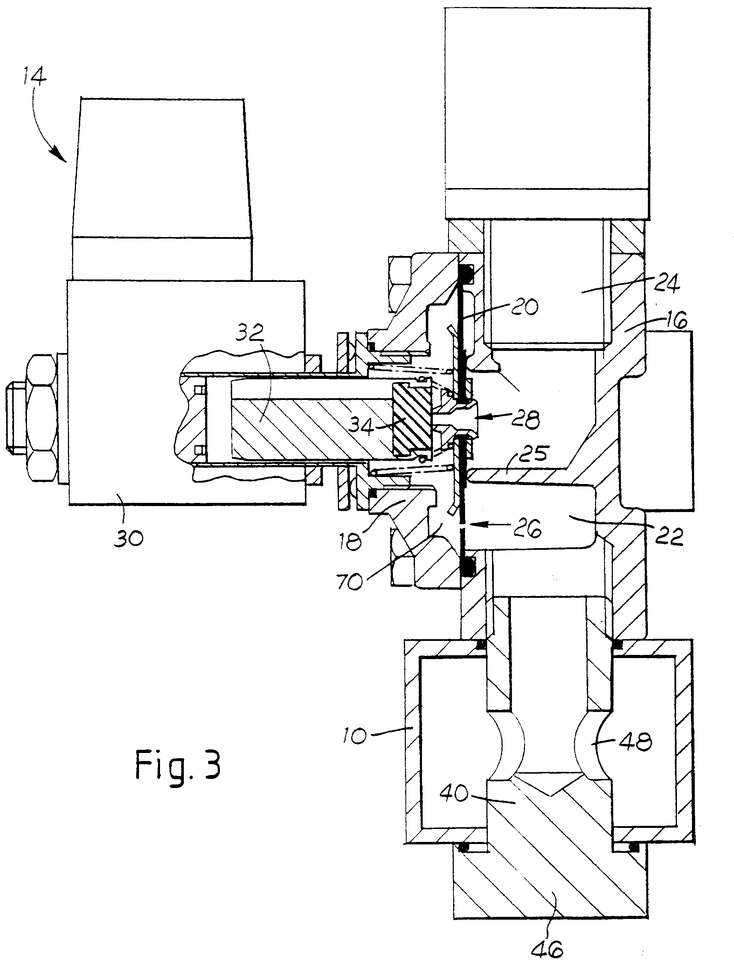

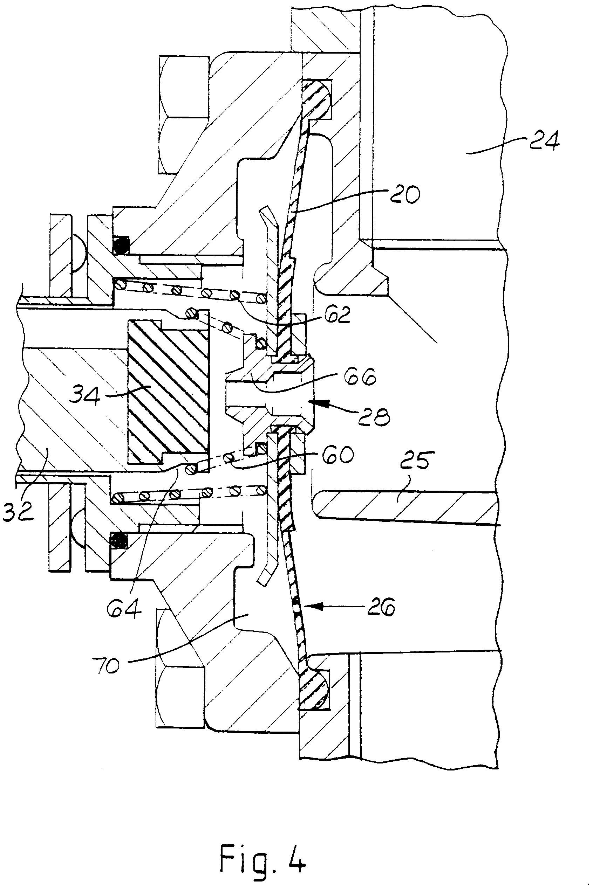

Each solenoid valve, see now Figures 3 and 4, comprises a main body made in two parts 16 18 which are separated by diaphragm 20. Inlet passage 22 and outlet passage 24 are coaxial and isolated by divider 24, so that a pair of seats is formed, one around each of the inlet and outlet terminations at the diaphragm (in the closed position).

The diaphragm has a small hole 26 aligned with the inlet and a larger hole 28 aligned with the outlet.

Cover 30 encloses the coil for electromagnetic displacement of armature 32 carrying valve plug 34. The valve plug is not physically connected to the diaphragm except by a first weak conical tension spring 60 having end coils engaged in groove 64 in the armature 32 and in a centre grommet 66 fixed to the diaphragm.

Each solenoid valve is fixed to the manifold 10 by an individual bolt 40 42 or 44. Bolts 40 have a solid head 46 and are laterally ported at 48. These bolts 40 are used to connect flow between the manifold 10 interior and the flow passages 22 24 in the valve. Bolts 42 also have the ports 48 but the head 50 also forms a flow passage for connection to a fluid conduit. Bolts 44 have the same head 50 but no lateral ports 48. So according to the choice of bolt there can be flow between the manifold interior of the valve, between a separate conduit and the valve but not involving the manifold interior, or between both the valve and the manifold and conduit. As explained hereinafter, the flow can be in either direction.

The outlet connections 24 of each valve may supply a single outlet as via a hose connection 52 or a pair of connectors via a branch fitting 54. Moreover, the inlet and outlet passages 22 24 may be identical allowing the solenoid valve per se to be reversed so that passage 24 is fixed to the manifold by any of the bolts and passage 22 is connected to a fluid line. This is important when the valve is arranged to be held closed by line pressure as hereinbefore mentioned and now further explained.

Fluid pressure in inlet 22 bleeds via the small hole 26 into chamber 70 in the body part 18 and acts on the whole area of the diaphragm on that side, although acting only on the smaller area in the fluid passage 22 within the corresponding seat. If passage 24 is unpressurised, for example connected to a jet nozzle or permanently opened delivery port, then line pressure serves to hold the diaphragm closed and prevent leakage or flow until the solenoid is electrically energised. Then the plug 34 is withdrawn opening the large hole 28 to allow flow through the grommet into the passage 24 out of chamber 70 and at a faster rate than into the chamber via the small hole 26, so that the pressurised fluid in passage 22 may now act to flex the diaphragm. This produces the required opening action to allow full rate flow through the valve without passing through the diaphragm, and this fluid pressure opening reduces wear on the diaphragm compared to what would be the case if the diaphragm were physically connected to the armature for valve opening.

Movement of the diaphragm is aided by the weak spring 60 which tends to pull the diaphragm to follow the armature (to the left in the drawings) but resisted by the outer spring 62. The spring values may be selected according to the pressure expected in the line so as to give the required operation.

It will be appreciated that the solenoid valve 14 is to be inverted relative to the manifold 10 from the Figure 3 position in cases where the flow is to be in the direction of arrow A through the valve: in such cases unported bolts 44 will usually be employed.

By way of illustration, the manifold of Figure 1 may be used in a car wash apparatus and connected as follows:

Solenoid valve 14a may be connected to a hot water supply via bolt head 50 and to the spray lines via connector 52.

Solenoid valve 14b may be connected to the same boiler source via its bolt head 50 but in this case also drawing water from the manifold via ports 48 and delivering this through outlets 54a and 54b. One of these may be connected to for example a wheel wash via a strong detergent injection point, and the other to a foam wash via weaker detergent injection point.

Valve 14c supplies water to the manifold only via its pair of outlets for delivering the water, again perhaps injected with shampoo mixes to different places in the apparatus.

Valve 14d has a similar function to valve 14c but may bypass the injection points.

Valve 14e is to deliver fresh water, possibly with drying agent injected as a final rinse.

Much if not all of the water used is recycled, and this is supplied with a manifold as its water source. This is the point of providing the separate cleaner water source for the final rinse.

It will be appreciated that in this arrangement all of the solenoid valves in fact conduct fluid from right to left in the drawing, that is none is inverted in relation to the other. All of the bolts 40-44 go into the passage 22 and none into the passage 24.

It will be appreciated by those skilled in the art that the application selected for the purposes of description herein is illustrative, and the invention is applicable to manifolds with multiple solenoid valves for any other purpose.

## Claims

1. Means for controlling the flow of fluids comprising a tubular manifold, a plurality of individually operable solenoid valves mounted on the manifold, a number of inlets and/or outlets opening to and from the manifold, and further inlets or outlets to or from the manifold via the solenoid valves, each of those valves being fired in place on the manifold by a corresponding tubular bolt extending diametrically through the manifold between a head on one side and a flow passage in the solenoid valve on the other side.

2. Means as claimed in Claim 1 wherein each solenoid valve comprises a body formed with inlet and outlet passages connected by a transfer chamber, a diaphragm in said chamber, a small flow orifice through the diaphragm aligned with the inlet passage, a larger flow orifice through the diaphragm aligned with the outlet passage, and an armature which is electrically displaceable between two positions in one of which the armature blocks the larger orifice and holds the diaphragm on to seats formed around each of the inlet and outlet passage terminations at the transfer chamber so that inlet fluid may bleed to the transfer chamber through the small orifice but not exhaust therefrom, whereby inlet pressure at least assists in holding the valve closed, and in the other of which the armature is displaced away from the said one position to allow exhaust of fluid from the transfer chamber through the larger orifice, to allow the diaphragm to flex away from the said seats, and to allow fluid flow direct from inlet to outlet.

3. Means as claimed in Claim 1 wherein ones of the bolts each comprise a tubular body closed at a head end and laterally ported at a location inside the manifold whereby a fluid communication path between the manifold interior and the corresponding solenoid valve is established.

4. Means as claimed in Claim 1 wherein ones of the bolts each comprise a tubular body which is not laterally ported and which affords a fluid communication path across the manifold between respective ends of the bolt.

5. Means as claimed in Claim 1 wherein ones of the bolts each comprise a tubular body which is laterally ported affording fluid communication paths through the bolt from end-to-end and from the manifold interior into the bolt.

6. Means as claimed in Claim 2 wherein the inlet and outlet passages are identical whereby the valve may be located for reverse direction fluid flow relative to the manifold.

7. Apparatus for controlling the flow of fluids substantially as hereinbefore described and with references to the accompanying drawings.
